# EUROPÄISCHE PATENTANMELDUNG

(11) **EP 0 620 066 A1**
(43) Veröffentlichungstag der Anmeldung: **19.10.1994**
(21) Anmeldenummer: 93913666.9
(22) Anmeldetag: 17.05.1993
(51) Int. Cl.: B23B 1/00, B23B 11/00

(54) **VERFAHREN ZUR KUEHLUNG DER ZONE EINER SPANGENENDEN BEARBEITUNG EINES WERKSTOFFS UND VORRICHTUNG ZU DESSEN DURCHFUEHRUNG**

(30) Priorität: 07.10.1992 RU 5060170
(71) Anmelder: AKHMETZYANOV, Izyaslav Dmitrievich, Chboksary, 428017 (RU); ZAMMAN, Atik, Moscow, 121157 (RU)
(72) Erfinder: AKHMETZYANOV, Izyaslav Dmitrievich, Chboksary, 428017 (RU); ZAMMAN, Atik, Moscow, 121157 (RU)
(74) Vertreter: Zellentin, Rüdiger, Dr.
(86) Internationale Anmeldenummer: RU9300110
(87) Internationale Veröffentlichungsnummer: WO9407631

(57) **Zusammenfassung**

Das Verfahren und die Vorrichtung werden zum Kühlen der Zone einer spangebenden Bearbeitung von Werkstoffen angewendet.

Im Verfahren zur Kühlung der Zone einer spangebenden Bearbeitung eines Werkstoffs wird ein in einem Ionisator im Felde einer Koronaentladung bearbeitetes gasförmiges Schmier- und Kühlmittel mit einer Geschwindigkeit zugeführt, die nicht kleiner als die Schnittgeschwindigkeit ist, und zur Erregung der Koronaentladung wird ein regelbarer stabiliserter elektrischer Strom benutzt, dessen Stärke entsprechend der Änderung der Zuführungsgeschwindigkeit des gasförmigen Schmier- und Kühlmittels geändert wird. Dabei verfügt die Vorrichtung zum Durchführen dieses Verfahrens, die einen, ein mit der Zuführungsquelle (3) des gasförmigen Schmier- und Kühlmittels über eine Leitung (9) kommunizierendes Gehäuse (7) mit einer Ausgangsdüse (8) aufweisenden, Ionisator (1), eine im Gehäuse (7) untergebrachte Sprühelektrode (2) sowie eine mit der Sprühelektrode leitend verbundene Stromversorgungsquelle (4) enthält, über einen in die Leitung (9) zum Zuführen des gasförmigen Schmier- und Kühlmittels geschalteten Regler (5) sowie einen im Stromversorgungskreis der Sprühelektrode (2) liegenden regelbaren Stabilisator (6) der Stärke des Ausgangsstroms.

## Beschreibung

### Gebiet der Technik

Die Erfindung bezieht sich auf Verfahren zur spangebenden Bearbeitung von Werkstoffen und betrifft insbesondere ein Verfahren zur Kühlung der Zone einer spangebenden Bearbeitung eines Werkstoffs sowie eine Vorrichtung zu dessen Durchführung.

### Stand der Technik

Bekannt ist ein Verfahren zur spangebenden Bearbeitung von Werkstoffen (SU, A, 1483205), bei dem Druckluft durch ein Wirbelrohr in ein Mittel zur Ionisierung des Luftstroms zugeführt wird. Zur Ionisierung der Luft wird eine Koronaentladung benutzt. Bei Stromzuführung an eine Sprühelektrode entsteht eine Koronaentladung; unter Einwirkung deren elektrischen Feldes findet eine Ionisierung und Ozonisierung der Luft statt. Die ionisierte und ozonisierte Luft wird über einen Stutzen in die Spanungszone zugeführt. Sie kühlt das Zerspanungswerkzeug und den zu bearbeitenden Werkstoff. Darüber hinaus beschleunigt der ionisierte Luftstrom die Bildung eines dünnen Oxidfilmes auf der Oberfläche des zu bearbeitenden Werkstoffs und des Zerspanungswerkzeugs. Der Oxidfilm dient als Schmiermittel im Laufe der Zerspanung, das die Reibung mindert und damit die Wärmeentwicklung in der Spanungszone herabsetzt.

Jedoch kann dieses Verfahren eine genügend wirksame Kühlung und Schmierung der Oberfläche des zu bearbeitenden Werkstoffs und der des Zerspanungswerkzeugs nicht gewährleisten. In der Spanungszone entstehen wesentliche konvektive und gasdynamische Ströme, die das Geraten der ionisierten und ozonisierten Luft in die Spanungszone hindern. Darum nimmt die Sicherheit der Bildung eines Oxidfilmes auf der zu bearbeitenden Oberfläche und dem Zerspanungswerkzeug ab, was eine niedrige Werkzeugstandzeit und eine Minderung der Oberflächengüte zur Folge hat.

Das bereits beschriebene Verfahren kann mit Hilfe einer Vorrichtung zur spangebenden Bearbeitung von Werkstoffen durchgeführt werden (SU, A, 1483205), die eine Stromquelle negativer Polarität, eine Einheit zur Erzeugung eines Luftstroms sowie ein Mittel zur Ionisierung des Luftstroms mit einer an die Stromquelle angeschlossenen Sprühelektrode enthält. Das Mittel zur Ionisierung der Luft stellt einen Stutzen mit der längs seiner Achse angeordneten Sprühelektrode dar. Die Einheit zur Erzeugung eines Luftstroms enthält eine Druckluftquelle, die über ein Wirbelrohr mit dem Eingang des Mittels zur Ionisierung des Luftstroms verbunden ist.

Die Vorrichtung besitzt dieselben Nachteile, wie das bereits beschriebene Verfahren.

### Offenbarung der Erfindung

Der Erfindung ist die Aufgabe der Schaffung eines Verfahrens zur Kühlung der Zone einer spangebenden Bearbeitung eines Werkstoffs, das eine Zuführung in die Spanungszone eines Schmier- und Kühlmittels mit genügender Geschwindigkeit und regelbaren physikalisch-chemischen Parametern, die die Bildung eines Oxidfilms mit genügender und gleichmäßiger Dicke auf den in Wechselwirkung befindlichen Oberflächen des Werkstoffs und des Zerspanungswerkzeugs sowie eine wirksame Wärmeabführung aus der Spanungszone gewährleistet, sowie der Entwicklung einer Vorrichtung zur Durchführung dieses Verfahrens zugrunde gelegt.

Die gestellte Aufgabe wird dadurch gelöst, daß im Verfahren zur Kühlung der Zone einer spangebenden Bearbeitung eines Werkstoffs, bei dem in die Spanungszone ein in einem Ionisator im Feld einer Koronaentladung bearbeitetes gasförmiges Schmier- und Kühlmittel zugeführt wird, erfindungsgemäß das gasförmige Schmier- und Kühlmittel in die Spanungszone mit einer Geschwindigkeit zugeführt wird, die nicht kleiner als die Schnittgeschwindigkeit ist, und zur Erregung der Koronaentladung ein regelbarer elektrischer Strom benutzt wird, dessen Stärke entsprechend der Änderung der Zuführungsgeschwindigkeit des gasförmigen Schmier- und Kühlmittels geändert wird.

Bei der Bearbeitung des Werkstoffs entstehen in der Spanungszone konvektive und gasdynamische Ströme, die das Geraten des Stroms des gasförmigen Schmier- und Kühlmittels in die Spanungszone hindern. Zur Verhütung dieses Effektes, ist die Zuführungsgeschwindigkeit des gasförmigen Schmier- und Kühlmittels nicht unterhalb der Schnittgeschwindigkeit einzustellen. Die Benutzung für die Erregung einer Koronaentladung eines stabilisierten elektrischen Stroms ermöglicht es, im Laufe der Bearbeitung einen stabilen Ionisierungsgrad des gasförmigen Mittels zu erhalten. Dies bewirkt die Bildung eines als Schmiermittel im Laufe der Bearbeitung dienenden gleichmäßigen Oxidfilms auf der Oberfläche des Zerspanungswerkzeugs und der des zu bearbeitenden Werkstoffs. Infolgedessen steigen die Verschleißfestigkeit des Werkzeugs und die Leistung und die Qualität der Bearbeitung. Darüber hinaus ermöglicht die Änderung der Stärke des elektrischen Stroms im Laufe der Bearbeitung bei Änderung der Zuführungsgeschwindigkeit des gasförmigen Schmier- und Kühlmittels den erforderlichen Grad seiner Ionisierung konstant zu halten, wodurch ebenfalls die Bearbeitungsgüte des Werkstoffs und die Wiederholungswahrscheinlichkeit guter Resultate für verschiedene Werkstoffe und verschiedene Bearbeitungsintensitäten erhöht werden.

Bei Änderung der Zuführungsgeschwindigkeit des gasförmigen Schmier- und Kühlmittels ist es vorteilhaft, die Stärke des elektrischen Stroms proportional zu ändern. Dies ermöglicht es, den erforderlichen Grad der Ionisierung des Mittels und seine chemische Aktivität konstant zu halten, wodurch die Wiederholung einer hochqualitativen Bearbeitung gewährleistet und die Standdauer des Zerspanungswerkzeugs erhöht wird.

Für einige zu bearbeitende Werkstoffe, solche, wie, zum Beispiel, Automatenstahl, ist die Stromstärke direkt proportional zur Änderung der Zuführungsgeschwindigkeit des gasförmigen Schmier- und Kühlmittels zu ändern.

Zur Erregung einer Koronaentladung ist es vorteilhaft, einen stabilisierten elektrischen Strom zu benutzen. Dies ermöglicht es, die Änderung der regelbaren Stromstärke an die Zuführungsgeschwindigkeit des gasförmigen Schmier- und Kühlmittels am besten anzupassen.

Die Vorrichtung zur Kühlung der Zone einer spangebenden Bearbeitung eines Werkstoffs, enthält einen Ionisator, der ein mit der Zuführungsquelle des gasförmigen Schmier- und Kühlmittels über eine Leitung kommunizierendes Gehäuse mit einer der Spanungszone zugewandten Ausgangsdüse aufweist, eine im Gehäuse untergebrachte Sprühelektrode sowie eine mit der Sprühelektrode leitend verbundene Stromquelle, wobei erfindungsgemäß in die Zuführungsleitung des gasförmigen Schmier- und Kühlmittels ein Regler der Zuführungsgeschwindigkeit dieses Mittels geschaltet ist.

Die Vorrichtung besitzt sämtliche Vorteile des beanspruchten Verfahrens.

### Nachfolgend wird die Erfindung durch

Beschreibung eines konkreten Beispiels ihrer Ausführung mit Hinweis auf eine Zeichnung erläutert, in der die Vorrichtung zur Kühlung der Zone einer spangebenden Bearbeitung eines Werkstoffs, deren Arbeit entsprechend dem beanspruchten Verfahren erfindungsgemäß verläuft, schematisch dargestellt ist.

### Realiserungsvariante der Erfindung

Die Vorrichtung zur Kühlung der Zone einer spangebenden Bearbeitung eines Werkstoffs enthält einen Ionisator 1 beliebiger Bauweise mit einer Sprühelektrode 2, zum Beispiel, negativer Polarität, eine Zuführungsquelle 3 des gasförmigen Schmier- und Kühlmittels, eine Stromversorgungsquelle 4, die an die Sprühelektrode angeschlossen ist, einen Regler 5 der Zuführungsgeschwindigkeit des gasförmigen Schmier- und Kühlmittels sowie einen steuerbaren Stabilisator 6 der Stärke des Ausgangsstroms im Stromversorgungskreis.

Der Ionisator 1 enthält ein hohles Gehäuse 7, das, zum Beispiel, als positive Elektrode dient und eine der Spanungszone zugewandte Ausgangsdüse 8 aufweist, wobei in diesem Gehäuse 7 längs seiner Längsachse die Sprühelektrode 2 angeordnet ist, die an die Stromversorgungsquelle 4 angeschlossen ist, wobei als diese eine Wechselstromquelle oder eine Stromquelle negativer Polarität oder eine Stromquelle positiver Polarität benutzt werden kann, deren Auswahl vom Werkstoff des Werkstücks, vom Zerspanungswerkzeug, von der Zerspanungsintensität sowie von der Zusammensetzung des technologischen gasförmigen Schmier- und Kühlmittels abhängt.

Das Gehäuse 7 kommuniziert über eine Leitung 9 mit der Zuführungsquelle 3 des gasförmigen Schmier- und Kühlmittels, zum Beispiel, einer Druckluft, die beim Durchströmen des Gehäuses 7 und bei Wechselwirkung mit dem zwischen der Sprühelektrode 2 und dem Gehäuse 7 erregten Feld der Koronaentladung mit gleichzeitiger Bildung von Ozon ionisiert und in Form eines gerichteten Stroms durch die Düse 8 in die Zone der spangebenden Bearbeitung zugeführt wird.

Der Regler 5 der Zuführungsgeschwindigkeit des gasförmigen Schmier- und Kühlmittels ist in die Leitung 9 geschaltet und in Form einer bekannten Einrichtung ausgeführt, die die Konstanthaltung einer Zuführungsgeschwindigkeit dieses Mittels im vorgegebenen Bereich, nicht unterhalb der Schnittgeschwindigkeit, ermöglicht, als welches, zum Beispiel, ein Ventil benutzt werden kann, wobei die Steuerung dessen Stellglieds (Sperrglieds) entweder manuell nach den Anzeigewerten eines die Schnittgeschwindigkeit messenden Meßinstrumentes oder automatisch anhand der Signale eines an dem zu bearbeitenden Werkstück angeordneten und mit einer punktierten Linie gezeigten Gebers 10 verlaufen kann, wobei die Verbindungsleitung des Gebers 10 mit dem Stellglied des Reglers 5 ebenfalls mit punktierter Linie dargestellt ist.

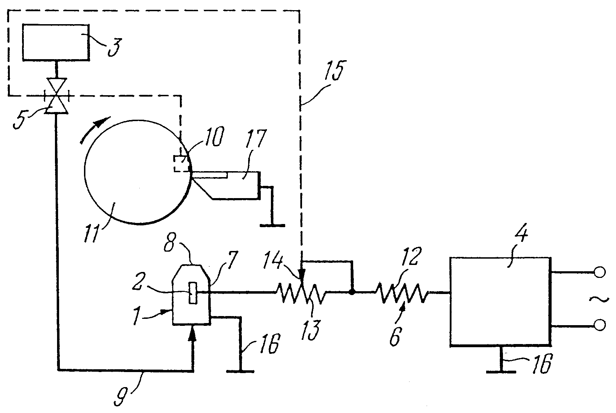

Der regelbare Ausgangsstromstabilisator 6 liegt im Stromversorgungskreis der Sprühelektrode 2 zwischen der Stromversorgungsquelle 4 und dem Ionisator 1 und ist in Form eines bekannten Stromstabilisators, zum Beispiel, eines stromgegengekoppelten elektronischen Verstärkers oder, wie es in der Zeichnung gezeigt ist, in Form von zwei in Reihe liegenden, einem Fest- und einem regelbaren Widerstand 12 und 13 ausgeführt, deren Gesamtwiderstand größer als der Widerstand der Koronaentladung ist und die eine Regelung der Stromstärke entsprechend der Änderung der Zuführungsgeschwindigkeit des gasförmigen Schmier- und Kühlmittels ermöglichen. Dabei kann die Steuerung des Stellgliedes 14 dieses Widerstandes 13 manuell entsprechend der Stellenänderung des Stellgliedes des Reglers 5 oder automatisch erfolgen, wenn der Eingang des Stellgliedes 14 des Widerstandes 13 durch die mit Punktierlinie gezeigte Verbindungsleitung 15 an den Ausgang des Stellgliedes des Reglers 5 angeschlossen ist.

Die Stromversorgungsquelle 4 und der Ionisator 1 sind an die Nullpotentialschiene 16 angeschlossen.

Die Arbeit der Vorrichtung entsprechend dem beanspruchten Verfahren verläuft folgenderweise.

Bei einer spangebenden Bearbeitung wird das Werkstück 11 mit vorgegebener Drehgeschwindigkeit in Drehbewegung gebracht, an seine Oberfläche wird das Zerspanungswerkzeug 17 zugestellt und bei ihrem Kontakt und ihrer gegenseitigen Bewegung erfolgt die spangebende Bearbeitung des Werkstücks. Die Schnittgeschwindigkeit wird entsprechend der gewählten Technologie eingestellt und in Abhängigkeit vom Werkstoff des Werkstücks und des Zerspanungswerkzeugs sowie vom Typ der angewendeten Ausrüstung usw. geändert.

Gleichzeitig mit der Bearbeitung des Werkstücks wird in die Spanungszone ein Schmier- und Kühlmittel, u.z.w., ein ionisierter und ozonisierter Luftstrom zugeführt, der nach einem bekannten Verfahren im Feld der Koronaentladung des Ionisators erzeugt und in Form eines gerichteten Stroms durch die Düse 8 seines Gehäuses 7 zugeführt wird. Der Strom der ionisierten Luft kühlt das Zerspanungswerkzeug 17 und den in Bearbeitung befindlichen Werkstoff des Werkstücks 11 ab; darüber hinaus beschleunigt der ionisierte Luftstrom die Bildung eines dünnen Oxidfilms auf der Oberfläche des bearbeiteten Werkstoffs und der des Zerspanungswerkzeugs, der als Schmiermittel dient und die Wärmeentwicklung in der Spanungszone herabsetzt.

Entsprechend der eingestellten oder geänderten Schnittgeschwindigkeit wird mit dem Regler 5 die Zuführungsgeschwindigkeit V₁ des gasförmigen Schmier- und Kühlmittels vorgegeben, die gleich oder größer als die Schnittgeschwindigkeit eingestellt wird, wodurch es dem Strom dieses Mittels ermöglicht wird, die in der Spanungszone entstehenden konvektiven und gasdynamischen Luftströme zu überwinden.

Zur Konstanthaltung der Parameter des ionisierten Luftstroms auf einem vorgegebenen Niveau entsprechend der eingestellten oder geänderten Schnittgeschwindigkeit wird zur Erregung der Koronaentladung im Ionisator ein regelbarer stabilisierter elektrischer Strom angefangen mit einer Stärke von 1 µA benutzt, dessen Stärke entsprechend der Änderung der Zuführungsgeschwindigkeit V₁ des gasförmigen Schmier- und Kühlmittels eingestellt wird. Dazu wird das Steuersignal vom Ausgang des Reglers 5 dem Eingang des steuerbaren Stabilisators 6, d.h., dem Widerstand 13 zugeführt, der die Stromstärke proportional oder direkt proportional zur Änderung der Zuführungsgeschwindigkeit des gasförmigen Schmier- und Kühlmittels ändert, was von der ARt der spangebenden Bearbeitung und vom Typ des verwendeten Werkstoffs des zu bearbeitenden Werkstücks und des benutzten Zerspanungswerkzeugs abhängt.

Die Regelung der Stärke des stabilisierten Stroms angefangen mit 1 µA ist dadurch bedingt, daß bei einer Stromstärke unterhalb 1 µA die Koronaentladung im Ionisator nicht erregbar ist.

### Beispiel 1

Auf einer Drehbank wurde eine spangebende Bearbeitung eines Werkstücks aus Stahl der Sorte 20G vorgenommen, dabei wurde ein Zerspanungswerkzeug MS-1460 benutzt, eine Schnittgeschwindigkeit von 160 m/min und eine Zuführungsgeschwindigkeit des gasförmigen Schmier- und Kühlmittels von 600 m/min eingestellt. Zur Erregung einer Koronaentladung wurde eine Stromstärke von 60 µA benutzt. Bei Änderung der Schnittgeschwindigkeit und beim Bringen dieser bis auf 250 m/min betrug die Zuführungsgeschwindigkeit des gasförmigen Schmier- und Kühlmittels 900 m/min, wobei die mit dem Stabilisator regelbare Stromstärke proportional geändert wurde und 80 µA betrug.

Infolgedessen betrug die Standzeit des Werkzeugs laut dem Prototyp entsprechend 34 und 19 min und bei der Bearbeitung nach dem beanspruchten Verfahren entsprechend 61 und 31 min.

### Beispiel 2

Auf einer Fräsmaschine wurde eine spangebende Bearbeitung eines Werkstücks aus Stahl 45 mittels eines Fräsers aus der Legierung R6M5 vorgenommen. Dabei wurde eine Schnittgeschwindigkeit von 15 m/min und eine Zuführungsgeschwindigkeit des gasförmigen Schmier- und Kühlmittels von 120 m/min eingestellt. Zur Erregung der Koronaentladung wurde eine Stromstärke von 50 A benutzt. Bei Änderung der Schnittgeschwindigkeit und beim Bringen dieser bis auf 25 m/min betrug die Zuführungsgeschwindigkeit des gasförmigen Schmier- und Kühlmittels 200 m/min, wobei die mit dem Stabilisator regelbare Stromstärke proportional geändert wurde und 83 µA betrug.

Dabei stieg die Standzeit der Fräser im Vergleich zum Prototyp in beiden Fällen 1,45 fach.

### Industrielle Anwendbarkeit

Das beanspruchte Verfahren kann bei spangebender Bearbeitung von Werkstoffen insbesondere beim Drehen, Fräsen, Bohren, Zahnfräsen u.dgl. angewendet werden. Die Vorrichtung zum Kühlen der Zone einer spangebender Bearbeitung eines Werkstoffs kann an bekannten Werkzeugmaschinen, in automatischen und Rotorfertigungsstraßen und in robototechnischen Komplexen angewendet werden.

## Patentansprüche

1. Verfahren zur Kühlung der Zone einer spangebenden Bearbeitung eines Werkstoffs, bei, dem in die Spanungszone ein in einem Ionisator (1) im Feld einer Koronaentladung bearbeitetes gasförmiges Schmier- und Kühlmittel zugeführt wird, **dadurch gekennzeichnet**, daß das Schmier- und Kühlmittel in die Spanungszone mit einer Geschwindigkeit zugeführt wird, die nicht kleiner als die Schnittgeschwindigkeit ist und daß zur Erregung der Koronaentladung ein regelbarer elektrischer Strom benutzt wird, dessen Stärke entsprechend der Änderung der Zuführungsgeschwindigkeit des gasförmigen Schmier- und Kühlmittels geändert wird.

2. Verfahren nach Anspruch 1, **dadurch gekennzeichnet**, daß zur Erregung der Koronaentladung ein regelbarer stabilisierter elektrischer Strom benutzt wird.

3. Verfahren nach Anspruch 1, **dadurch gekennzeichnet**, daß die Stärke des elektrischen Stroms proportional zur Änderung der Zuführungsgeschwindigkeit des gasförmigen Schmier- und Kühlmittels geändert wird.

4. Verfahren nach Anspruch 1, **dadurch gekennzeichnet**, daß die Stärke des elektrischen Stroms direkt proportional zur Änderung der Zuführungsgeschwindigkeit des gasförmigen Schmier- und Kühlmittels geändert wird.

5. Vorrichtung zur Kühlung der Zone einer spangebenden Bearbeitung eines Werkstoffs, enthaltend einen Ionisator (1), der ein mit der Zuführungsquelle (3) des gasförmigen Schmier- und Kühlmittels über eine Leitung (9) kommunizierendes Gehäuse (7) mit einer der Spanungszone zugewandten Ausgangsdüse (8) aufweist, eine im Gehäuse (7) untergebrachte Sprühelektrode (2) sowie eine mit der Sprühelektrode (2) leitend verbundene Stromversorgungsquelle (4), **dadurch gekennzeichnet**, daß in die Leitung (9) zum Zuführen des gasförmigen Schmier- und Kühlmittels ein Regler (5) der Zuführungsgeschwindigkeit dieses Mittels geschaltet ist.
